# EUROPEAN PATENT APPLICATION

(11) **EP 1 521 222 A2**
(43) Date of publication of application: **06.04.2005**
(21) Application number: 04254729.9
(22) Date of filing: 05.08.2004
(51) Int. Cl.: G07G 1/00

(54) **Mobile retail units**

(30) Priority: 05.08.2003 GB 0318348
(71) Applicant: Cash Bases Limited, New Haven, East Sussex BN9 0LA (GB)
(72) Inventor: Byerley, Stephen, Purley CR8 4EA (GB)
(74) Representative: Leckey, David Herbert

(57) **Abstract**

A mobile retail unit 1 comprises weighing scales 4 arranged in a surface 6 of the unit 1 and means 32 accessible externally of the unit 4 for levelling the weighing scales 1.

## Description

The present invention relates to mobile retail units which incorporate weighing devices.

In an attempt to reduce queueing times in supermarkets, mobile retail units have been proposed. These units are typically provided with a cash till and also weighing scales arranged in a surface of the unit to allow fruit, vegetables and so on to be weighed for pricing. The unit can have a self contained power source such as a battery and wheels to allow it to be wheeled around the store. Alternatively the unit may be connectable to an external power source such as a wall power socket.

A problem which has been found with such units, however, is that as they are being moved around the store, the unit may be positioned on an uneven floor surface. If that occurs, the weighing scales may not function accurately as they are not level.

The present invention seeks to overcome this problem and from a first aspect provides a mobile retail unit comprising weighing scales arranged in a surface of said unit, and means accessible externally of the unit for levelling the weighing scales.

Preferably the scales are mounted on a platform which is suitably mounted to the unit. In a preferred embodiment, the platform may be at least partially suspended from the unit.

Preferably the platform mounting comprises a plurality of supports, for example brackets, with one or more of the supports being adjustable to level the scales.

In a preferred embodiment, the platform is supported such that it may pivot.

In one embodiment, one side of the platform is supported by a pair of spaced apart adjustable supports while an opposite side of the scales is supported pivotally by a support arranged intermediate the positions of the adjustable supports. Preferably the adjustable supports are also pivotally coupled to the platform. This 'triangular' support arrangement allows easy levelling of the scales in all directions.

This is in itself, a novel arrangement, so from a further aspect the invention provides a system for levelling a weighing scale or other apparatus with respect to a surface comprising three supports arranged in a triangular configuration, said supports allowing pivotal movement of the scales or apparatus about a plurality of axes and two of said supports being capable of vertical adjustment to effect the levelling.

The supports may, as described above, be attached to a platform for the scales, or they may be attached directly to the scales.

The adjustment may be provided in any convenient manner. Preferably, however, the support is provided with an adjustment screw having one end threadably engaging the support and the other end extending up through and supported by a part of the unit. Rotation of the screw will cause the support and thus the scales to move up and down relative to the unit surface.

Preferably the head of the adjustment screw is recessed into a unit surface.

The pivotal movement may be accomplished by virtue of a universal type joint arranged between the support and the scales or other item being supported. In a simple embodiment this joint may take the form of a peg engaging in an oversized hole, which allows play of the peg within the hole.

The scales may be provided with a suitable level indicator to show when they are level.

From a yet further broad aspect, the invention also extends to a weighing scale assembly for use in a mobile retail unit, the assembly comprising a set of weighing scales, a support platform for the scales, said platform being provide a with adjustable mounting means for mounting the platform to the unit in an adjustable manner for levelling the weighing scales.

A preferred embodiment of the invention will now be described, by way of example only, with reference to the accompanying drawings in which:
Figure 1 shows a mobile retail unit incorporating an adjustable weighing scale in accordance with the invention;
Figure 2 shows a front perspective view of the weighing scale of Figure 1; and
Figure 3 shows a rear perspective view of the weighing scale of Figure 1.

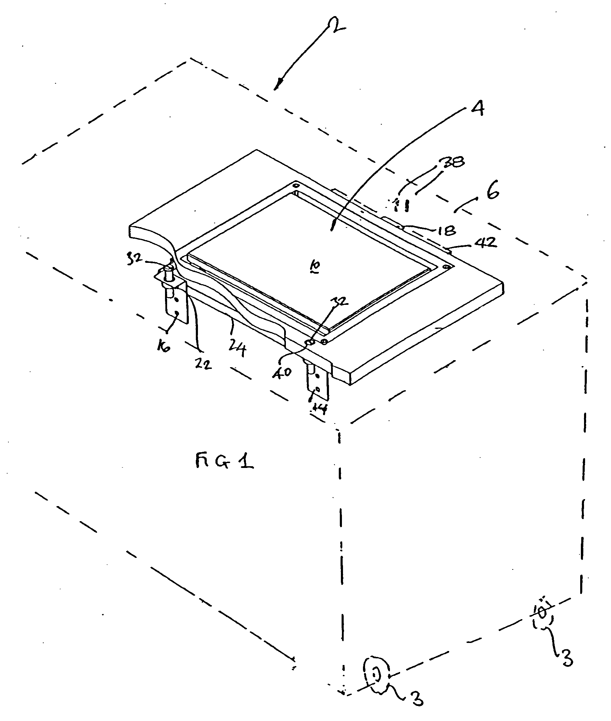

With reference to Figure 1, a mobile retail counter unit 2 is provided with wheels 3, a cash register (not shown) and a weighing scale 4 arranged in the counter 6 of the unit.

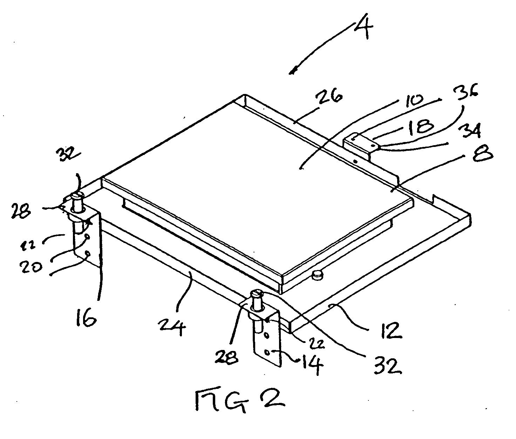

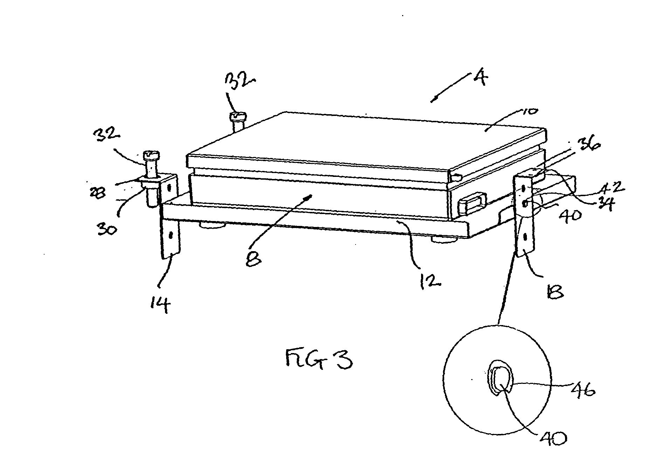

As can be seen from Figures 2 and 3, the weighing scale 4 comprises an electronic weighing unit 8 whose upper surface 10 lies flush with the counter surface 6. The unit 2 may have a built in power source such as a battery or may be connectable to an external power source. The weighing unit 8 is fixedly mounted in a platform or tray 12 by suitable means. The tray 12 is provided with three L-shaped mounting brackets 14,16,18. Each bracket is provided with mounting holes 20 through which the bracket is attached to the tray 12 by a pivotal joint 22 which will be described further below.

The two front brackets 14,16 are attached to the front wall 24 of the tray at opposed ends thereof while the remaining, rear, bracket 18 is attached centrally to the rear wall 26 of the tray 12. The brackets 14, 16, 18 are thus arranged in a triangular configuration.

The upper limb 28 of each front bracket 14,16 is provided with a threaded boss 30 which receives an adjustment screw 32. The upper limb 34 of the rear bracket 18 comprises a pair of apertures 36 which receive a pair of screws 38, shown in phantom in Figure 1. The screws 38 are screwed into the underside of the surface 6 to fix the bracket 18 in place.

The pivotal joint 22 attaching the tray 12 to the supports 14,16,18 allow the tray 12 to pivot about a plurality of axes during levelling. As is shown in greater detail in Figure 3, each joint comprises a pin or peg 40 which extends through an aperture 42 formed in the respective brackets. One end of the peg 40 is fixedly attached to the respective tray wall 24,26, for example by welding or by a press fit in an aperture in the wall 24,26. The other end of the peg 40 extends through the aperture 42 and is prevented from disengaging from the aperture 42 by a circlip 46 clipped over the end of the peg 40. The aperture 42 is oversized with respect to the peg 40 (typically by 10-20% diameter), so that the coupling acts as a universal joint, allowing the tray to pivot around front to back and side to side extending axes.

The adjustment screws 32 are each received in a recess 50 in the upper surface 6 of the unit 2. In fact, the adjustment screws 32 must be introduced into the recesses 50 from above for engagement with the screw bosses 30 in the front brackets 14,16.

With this arrangement, the front of the tray 12 is suspended through the screws 32, while the rear of the tray is pivotally supported through the peg 40.

In use, when the unit 2 is being wheeled around a store, and located in the new position, the operative can check whether the surface 6 is level by virtue of a level indicator typically incorporated in the scales themselves. If the tray 12 is not level, then it can be levelled very easily by adjusting one or both of the adjustment screws 32 using a screwdriver. The arrangement shown allows levelling by adjustment of one or both screws 32, the loose play of the pegs 40 in their respective apertures 42 accommodating this adjustment. Also, the levelling is effected externally of the unit 2 which makes the operation considerably easier.

It will be appreciated that the above description is merely of a preferred embodiment of the invention and other arrangements will fall within the scope of the invention. For example, the scales need not be mounted in an adjustable tray, but may be mounted in some other way, for example directly to, the unit, with the adjustment means being provided on the scales. Also, adjustment means other than screws are envisaged, for example cams etc.. In a yet further adaptation, the triangular support arrangement may be used to level devices other than weighing scales.

It will also be appreciated that a cover may be provided over the recesses 40 if desired to prevent accidental adjustment of the adjustment screws 32.

## Claims

1. A mobile retail unit comprising weighing scales arranged in a surface of the unit and means accessible externally of the unit for levelling the weighing scales.

2. A unit as claimed in claim 1 wherein the scales are mounted on an adjustable platform.

3. A unit as claimed in claim 2, wherein the platform is at least partially suspended from the unit.

4. A unit as claimed in claim 2 or 3, wherein the platform mounting comprises a plurality of supports, with one or more of the supports being vertically adjustable to level the scales.

5. A unit as claimed in claim 4, wherein the platform is pivotally supported.

6. A unit as claimed in claim 4 or 5, wherein one side of the platform is supported by a pair of spaced apart adjustable supports while an opposite side of the scales is supported by support arranged intermediate the positions of the adjustable supports, such that the supports are arranged in a triangular configuration.

7. A unit as claimed in claim 5 or 6 wherein said pivotable support is effected by a universal joint type coupling the support to the platform.

8. A unit as claimed in claim 7 wherein said coupling comprises a peg arranged in an oversized aperture.

9. A unit as claimed in any of claims 4 to 8, wherein the adjustable support is provided with an adjustment screw having one end threadably engaging the support and the other end extending up through and supported by a part of the unit.

10. A unit as claimed in claim 9, wherein the head of the adjustment screw is recessed into a unit surface.

11. A weighing scale assembly for use in a mobile retail unit, the assembly comprising a set of weighing scales, a support platform for the scales, said platform being provide with adjustable mounting means for mounting the platform to the unit in an adjustable manner for levelling the weighing scales.

12. A system for levelling a weighing scale or other apparatus with respect to a surface comprising three supports arranged in a triangular configuration, said supports allowing pivotal movement of the scales or apparatus about a plurality of axes with at least two of the supports being capable of vertical adjustment to effect the levelling.
